# EUROPEAN PATENT SPECIFICATION

(11) **EP 2 763 205 B1**
(45) Date of publication and mention of the grant of the patent: **09.03.2016**
(21) Application number: 13196429.8
(22) Date of filing: 10.12.2013
(51) Int. Cl.: H01M 2/04, H01M 2/20, H01M 2/34

(54) **Cap cover and battery pack including the same**
Abdeckkappe und Batteriepack damit
Couvercle et bloc-batterie le comprenant

(30) Priority: 01.02.2013 KR 20130011985
(43) Date of publication of application: 06.08.2014
(73) Proprietor: Samsung SDI Co., Ltd., Yongin-si, Gyeonggi-do (KR)
(72) Inventor: Moon, Dae-Yon, Yongin-si, Gyeonggi-do (KR); Lee, Eun-Joong, Yongin-si, Gyeonggi-do (KR)
(74) Representative: Gulde & Partner

(56) References cited:
- WO-A1-2008/066287
- JP-A- 2011 243 506
- US-A1- 2012 045 666

## Description

### FIELD OF THE INVENTION

One or more embodiments relate to a cap cover and a battery pack including the same.

### DESCRIPTION OF THE RELAED TECHNOLOGY

Portable electronic devices, such as notebook computers, tablet computers, smart phones, etc., are nowadays widely used. Such a portable electronic device includes a battery pack storing power so that the portable electronic device can be used for a predetermined period of time when it is separated from an external power source. The battery pack includes a plurality of battery cells constituting a secondary battery which is rechargeable and dischargeable to be repeatedly used.

A plurality of welding processes are performed to manufacture the battery pack including the plurality of battery cells.

### SUMMARY

One or more embodiments include a cap cover for a battery pack, the cap cover allowing reduction of the number of welding processes to manufacture the battery pack and preventing a temperature sensor from being damaged.

One or more embodiments include a battery pack that is manufactured via a reduced number of welding processes and prevents a temperature sensor from being damaged.

Additional aspects will be set forth in part in the description which follows and, in part, will be apparent from the description, or may be learned by practice of the presented embodiments.

According to one or more embodiments, a cap cover includes: a first plate which is formed in a first direction; a second plate which is formed in a second direction; and a third plate which is formed in a third direction. The first and third plates may have a step difference due to the second plate and cover upper surfaces of a plurality of battery cells arranged with a step difference therebetween, and the second plate may cover a side exposed through the step difference between the battery cells.

The first and third plates may be formed to expose electrode terminals of the battery cells.

The first and third directions may be the same direction.

The first and second directions may be perpendicular to each other.

The cap cover may further include: a plurality of lead plates which are spaced apart from one another and electrically connect the plurality of battery cells to one another.

The first and third plates may further include boss parts which protrude to combine the plurality of lead plates with the first, second, and third plates.

The plurality of lead plates may include: combiners which include a plurality of holes to be combined with the plurality of boss parts; connectors which contact the electrode terminals of the battery cells to be electrically connected to the battery cells; and thermal cut off (TCO) elements.

The connectors may include slits having H shapes.

The connectors may include: a plurality of pairs of welding terminals which are spaced apart from each other; and a pair of bypass parts which bypass above and under the welding terminals to electrically connect the welding terminals to one another.

The bypass parts may include first ends connected to one of the welding terminals and second ends connected to other one of the welding terminals. A distance between the first ends and the second ends may be greater than a distance between the welding terminals.

The second plate may further include: a temperature sensor inserting part into which a temperature sensor is inserted.

The temperature sensor inserting part may enclose at least one side of the temperature sensor

According to one or more embodiments, a battery pack includes: a plurality of battery cells which include first and second electrode terminals and are arranged with a step difference therebetween; and a cap cover which covers upper surfaces of the plurality of battery cells and a side of the battery cell exposed through the step difference.

The cap cover may include: a first plate which is formed in a first direction; a second plate which is formed in a second direction to cover the side of the exposed battery cell; and a third plate which is formed in a third direction. The first and third plates have a step difference therebetween due to the second plate and cover the upper surfaces of the plurality of battery cells.

The first and third directions may be the same direction.

The first and second directions may be perpendicular to each other.

The cap cover may expose first and second electrode terminals of the battery cells.

The second plate further include: a temperature sensor inserting part into which a temperature sensor is inserted.

The temperature sensor inserting part may enclose at least one side of the temperature sensor.

The cap cover may include: a plurality of lead plates which are disposed on the cap cover to electrically connect the plurality of battery cells to one another.

The cap cover may further include: a plurality of boss parts which protrude to be combined with the plurality of lead plates.

The plurality of lead plates may include: combiners which include a plurality of holes to be combined with the plurality of boss parts; connectors which are electrically connected to the first or second electrode terminals; and TCO elements.

The connectors may include: a plurality of pairs of welding terminals which are spaced apart from each other; and a pair of bypass parts which bypass above and under the welding terminals to electrically connect the welding terminals to one another.

The connectors may include slits having H shapes.

### BRIEF DESCRIPTION OF THE DRAWINGS

The present invention will become apparent and more readily appreciated from the following description of the embodiments, taken in conjunction with the accompanying drawings of which:
FIG. 1 is a schematic view illustrating a structure of a part of a battery pack according to an embodiment;
FIG. 2 is an enlarged view of part A of FIG. 1;
FIG. 3 is an enlarged view illustrating part B of FIG. 1;
FIG. 4 is a partial perspective view illustrating a temperature sensor inserting part into which a temperature sensor is inserted according to an embodiment; and
FIGS. 5 and 6 are schematic views illustrating a part of a process of combining a lead plate with the cap cover of FIG. 1 according to an embodiment.

### DETAILED DESCRIPTION

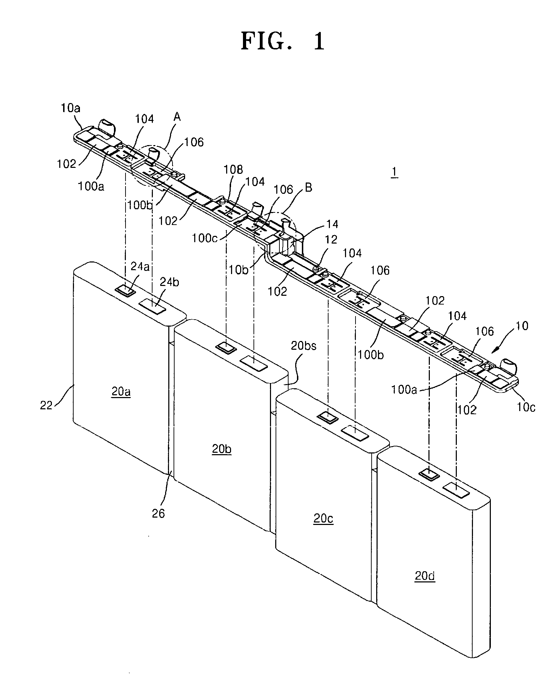

FIG. 1 is a schematic view illustrating a part of a structure of a battery pack 1 according to an embodiment.

Referring to FIG. 1, the battery pack 1 includes a plurality of battery cells 20a, 20b, 20c, and 20d and a cap cover 10 that covers the plurality of battery cells 20a, 20b, 20c, and 20d.

Each of the plurality of battery cells 20a, 20b, 20c, and 20d includes a first electrode terminal 24a and a second electrode terminal 24b.

The plurality of battery cells 20a, 20b, 20c, and 20d may constitute a rechargeable secondary battery, e.g., a lithium-ion battery. The plurality of battery cells 20a, 20b, 20c, and 20d include electrode assemblies (not shown) and cans 22 housing the electrode assemblies.

Positive plates, negative plates, and separators interposed between the positive plates and the negative plates may be stacked and then wound in a jelly roll form to manufacture the electrode assemblies. The cans 22 may comprise aluminum or an aluminum alloy, but are not limited thereto.

The negative plates of the electrode assemblies are electrically connected to the first electrode terminals 24a. The positive plates of the electrode assemblies are electrically connected to the second electrode terminals 24b.

The plurality of battery cells 20a, 20b, 20c, and 20d are disposed side by side in one direction with a height difference or interchangeably also called step difference, therebetween. The plurality of battery cells 20a, 20b, 20c, and 20d may be arranged so that the first and second electrode terminals 24a and 24b of the first and second battery cells 20a and 20b are disposed on the same horizontal plane and the first and second electrode terminals 24a and 24b of the third and fourth battery cells 20c and 20d are disposed on the same horizontal plane.

Spacers 26 are further formed in spaces between the plurality of battery cells 20a, 20b, 20c, and 20d. The spacers 26 may comprise an insulating material that may be an organic material or an inorganic material. The spacers 26 may be formed by using at least one or more of polyethylene (PE), polypropylene (PP), polyethersulfone (PES), polyphehyleneoxide (PPO), polyphenylene sulfidee (PSS), polyimide (PI), and polyethylene terephthalate (PET).

The cap cover 10 includes first, second, and third plates 10a, 10b, and 10c. The first plate 10a is formed in a first direction so that the first and second electrode terminals 24a and 24b of the first and second battery cells 20a and 20b are exposed. The second plate 10b is formed in a second direction, and the third plate 10c is formed in a third direction so that the first and second electrode terminals 24a and 24b of the third and fourth battery cells 20c and 20d are exposed. The cap cover 10 also includes a plurality of boss parts 12 which protrude upwards to be combined with a plurality of lead plates 100a, 100b, and 100c.

The first and third plates 10a and 10c have a step difference therebetween due to the second plate 10b formed in the second direction.

The first direction may be the direction parallel to upper surfaces of the first and second battery cells 20a and 20b. The first and third directions may be the same direction, and the second direction may be different from the first and third directions. For example, the first and second directions may be perpendicular to each other. However, the present embodiment is not limited thereto, and the second direction may form any angle with the first direction as long as a predetermined part of a side 20bs of the second battery cell 20b of the plurality of battery cells 20a, 20b, 20c, and 20d disposed with the step difference therebetween is covered. Throughout the following, the side 20bs can also be call an exposed area 20bs since it is the side surface area of the second battery cell 20b exposed by the height difference.

To cover upper parts of the plurality of battery cells 20a, 20b, 20c, and 20d disposed with the step difference therebetween, the first and third plates 10a and 10c contact upper surfaces of the battery cells 20a, 20b, 20c, and 20d, and the second plate 10b contacts a part of the side 20bs of the second battery cell 20b.

The cap cover 10 may be formed by injection molding or the like. The cap cover 10 may comprise a thermoplastic resin. For example, the cap cover 10 may comprise at least one or more of a glass fiber and a fiberglass reinforced plastic (FRP), wherein a plastic reinforcement is added to the glass fiber. However, the present embodiment is not limited thereto.

The cap cover 10 electrically connects the plurality of battery cells 20a, 20b, 20c, and 20d to one another in series, in parallel, or both. The cap cover 10 includes the plurality of lead plates 100a, 100b, and 100c disposed on the cap cover 10.

The plurality of lead plates 100a, 100b, and 100c are adjacent to one another and are maintained at predetermined distances from one another in one direction. The plurality of lead plates 100a, 100b, and 100c electrically connect the plurality of battery cells 20a, 20b, 20c, and 20d to one another. Distances between the adjacent lead plates 100a, 100b, and 100c may vary as long as there is no contact therebetween.

The first lead plate 100a is positioned at both ends of the plurality of battery cells 20a and 20d electrically connected to each other through the second and third lead plates 100b and 100c. For example, the first lead plate 100a may be positioned on an upper surface of the first electrode terminal 24a of the first battery cell 20a or on an upper surface of the second electrode terminal 24b of the fourth battery cell 20d to lead a high current.

The plurality of lead plates 100a, 100b, and 100c include combiners 108 to combine thermal cut off (TCO) elements 102 and the lead plates 100a, 100b, and 100c with the cap cover 10. The plurality of lead plates 100a, 100b, and 100c also include at least one of first and second connectors 104 and 106 for electrically connecting the lead plates 100a, 100b, and 100c to the battery cells 20a, 20b, 20c, and 20d.

The first and second connectors 104 and 106 directly contact the first and second electrode terminals 24a and 24b of each of the battery cells 20a, 20b, 20c, and 20d to be electrically connected to each of the battery cells 20a, 20b, 20c, and 20d.

The first connector 104 is electrically connected to the first electrode terminal 24a of each of the battery cells 20a, 20b, 20c, and 20d. The second connector 106 is electrically connected to the second electrode terminal 24b of each of the battery cells 20a, 20b, 20c, and 20d.

The first and second connectors 104 and 106 may be respectively combined with the first and second electrode terminals 24a and 24b of each of the battery cells 20a, 20b, 20c, and 20d by welding.

The first lead plate 100a lead the high current and thus include only one of the first and second connectors 104 and 106. The second and third plates 100b and 100c operate as electrical connections between the battery cells 20a, 20b, 20c, and 20d and include all of the first and second connectors 104 and 106.

For example, the first lead plate 100a on the left side is electrically connected to the first electrode terminal 24a on the upper surface of the first battery cell 20a and thus includes the first connector 104. The first lead plate 100a on the right side is electrically connected to the second electrode terminal 24b on the upper surface of the fourth battery cell 20d and thus includes the second connector 106.

On the upper surfaces of the first and second battery cells 20a and 20b, the second lead plates 100b include the second connector 106 electrically connected to the second electrode terminal 24b of the first battery cell 20a and the first connector 104 electrically connected to the first electrode terminals 24a of the second battery cell 20b. On the upper surfaces of the third and fourth battery cells 20c and 20d, the second lead plates 100b include the second connector 106 electrically connected to the second electrode terminal 24b of the third battery cell 20c and the first connector 104 electrically connected to the first electrode terminal 24a of the fourth battery cell 20d.

On the upper surfaces of the second and third battery cells 20b and 20c, the third lead plates 100c include the second connector 106 electrically connected to the second electrode terminal 24b of the second battery cell 20b and the first connector 104 electrically connected to the first electrode terminal 24a of the third battery cell 20c.

If the temperature of a battery cell rises to a predetermined temperature or more, the TCO elements 102, which include thermistors having positive thermal coefficients, cut off a current supplied to the battery cell.

The second electrode terminal 24b of the first battery cell 20a is electrically connected to the first electrode terminal 24a of the second battery cell 20b through the second connector 106 of the second lead plate 100b, the TCO element 102, and the first connector 104. Therefore, if the battery cells 20a, 20b, 20c, and 20d are heated to a predetermined temperature or more, the TCO elements 102 cut off a current flow between the battery cells 20a, 20b, 20c, and 20d. Therefore, additional overheating of the battery cells 20a, 20b, 20c, and 20d is immediately and effectively prevented.

The first and second connectors 104 and 106 are exposed to a lower surface of the cap cover 10 to be respectively connected to the first and second electrode terminals 24a and 24b of each of the battery cells 20a, 20b, 20c, and 20d.

In FIG. 1, the cap cover 10 is combined with four battery cells 20a, 20b, 20c, and 20d with the step difference therebetween. However, the number of battery cell is not limited thereto and may vary. A cap cover according to an embodiment may be applied to plurality of battery cells disposed to have a step difference therebetween.

According to the present embodiment, the all-in-on cap cover 20 is provided to cover the side 20bs of the second battery cell 20b exposed by the step difference between the battery cells, 20b, 20c disposed to have the step difference. Also, the plurality of lead plates 100a, 100b, and 100c including the TCO elements 102 are inserted into the cap cover 10. Therefore, the first and second connectors 104 and 106 are respectively electrically connected to the first and second electrode terminals 24a and 24b of the plurality of battery cells 20a, 20b, 20c, and 20d by welding.

Therefore, different from the conventional processes of separately welding TCO elements and lead plates, the first and second connectors 104 and 106 and the first and second electrode terminals 24a and 24b are welded together through a one-step process according to the present invention. As a result, the process is simplified, and the number of welding processes is reduced, thereby reducing a defect rate in comparison to the separate welding of the TCO elements and lead plates.

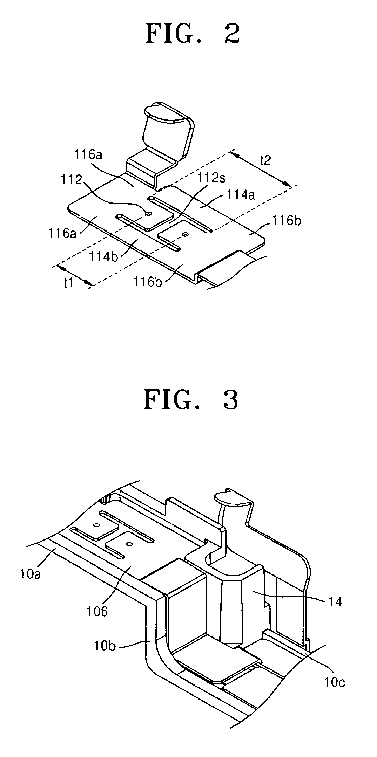

FIG. 2 is an enlarged view illustrating part A of FIG. 1.

Referring to FIGS. 1 and 2, the first connector 104 of the second lead plate 100b includes a pair of welding terminals 112 and a plurality of bypass parts 114a and 114b. The welding terminals 112 are spaced apart from each other.

The plurality of bypass parts 114a and 114b are formed above and under the welding terminals 112 to be electrically connected to the welding terminals 112.

The first connector 104 includes a slit 112s having a H shape due to the pair of welding terminals 112 and the plurality of bypass parts 114a and 114b.

Each of the plurality of bypass parts 114a and 114b includes end 116a connected to one of the welding terminals 112 and end 116b connected to the other one of the welding terminals 112. A distance T2 between the end 116a and the end 116b is greater than a distance T1 between the welding terminals 112

Due to the bypass parts 114a and 114b, a leakage current occurring when performing electric resistance welding by using the welding terminals 112 is reduced. When current is applied between the welding terminals 112 to perform the electric resistance welding, a portion of the current does not flow through the first or second electrode terminal 24a or 24b but becomes a leakage current flowing through the bypass parts 114a and 114b. In this case, if the distance T2 between the ends 116a and the ends 116b of the bypass parts 114a and 114b is greater than the distance T1 between the welding terminals 112, a path of the leakage current becomes longer. Therefore, a resistance is increased, and thus, an intensity of the leakage current passing through the resistance is reduced.

The slit 112s having the H shape is to allow a welding rod to be flexibly applied on the welding terminals 112. When pressure is applied to the welding terminals 112 via the welding rod, force is concentrated on the welding terminals 112.

Accordingly, weldability is improved, and bursts or blackening is effectively prevented.

The first connector 104 of the second lead plate 100b is exemplarily described above, but the present embodiments are not limited thereto

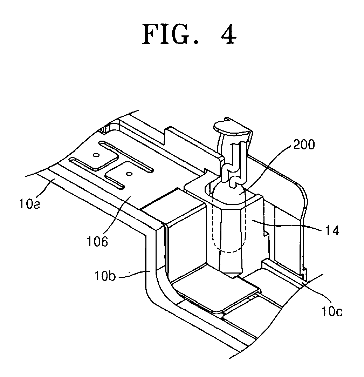

FIG. 3 is an enlarged view illustrating part B of FIG. 1. FIG. 4 is a partial perspective view illustrating a temperature sensor inserting part 14 into which a temperature sensor 200 is inserted.

Referring to FIGS. 1, 3, and 4, the second plate 10b is formed in the second direction which corresponds to to a step difference between the second and third battery cells 20b and 20c. The second plate 10b also includes the temperature sensor inserting part 14 into which the temperature sensor 200 is inserted. The second direction may be the same as a direction facing the side 20bs of the second battery cell 20b. However, the second direction is not limited thereto and may be a direction facing the upper surface of the third battery cell 20c on the upper surface of the second battery cell 20b.

The temperature sensor inserting part 14 encloses at least one side of the temperature sensor 200 and exposes a predetermined area of the side 20bs of the second battery cell 20b.

The temperature sensor 200 inserted into the temperature sensor inserting part 14 contacts the exposed side 20bs of the second battery cell 20b to measure a temperature of the second battery cell 20b.

Therefore, the temperature of the second battery cell 20b is sensed by the temperature sensor 200. The temperature sensor 200 is connected to a protection circuit module (not shown) through a flexible cable, and thus, an extraordinary situation when the temperature of the second battery cell 20b rises abnormally highly during recharging or discharging thereof is promptly detected within a short time so that accidents such as combustions or explosions can be prevented.

The temperature sensor inserting part 14 is formed at the second plate 10b due to which the second and third battery cells 20b and 20c have a step difference therebetween. Therefore, the temperature sensor 200 is easily arranged and is prevented from protruding more than a width of the side 20bs of the second battery cell 20b. As a result, the battery pack 10 of FIG. 1 is made more compact.

As described above, the temperature sensor 200 is inserted into the temperature sensor inserting part 14 formed at the second plate 10b to be fixed to the exposed side 20bs of the second battery cell 20b. The temperature sensor inserting part 14 encloses at least one side of the temperature sensor 200.

Therefore, the temperature sensor 200 is prevented from being damaged and immediately responds to variations in a temperature of the second battery cell 20b. Therefore, a reliability of the temperature sensor 200 is improved. Also, the temperature sensor 200 is prevented from moving when the battery pack 10 is manufactured, thereby improving the reliability of the battery pack 10.

The width of the third lead plate 100c formed at the second plate 10b is narrower than a width of the exposed area 20bs of the second battery cell 20b to secure a space for the temperature sensor inserting part 14.

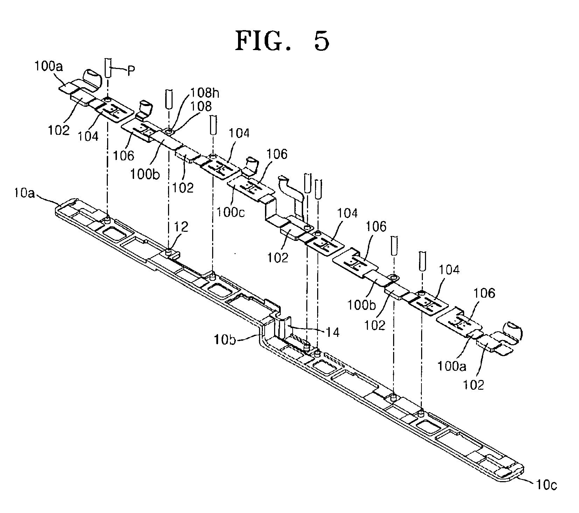

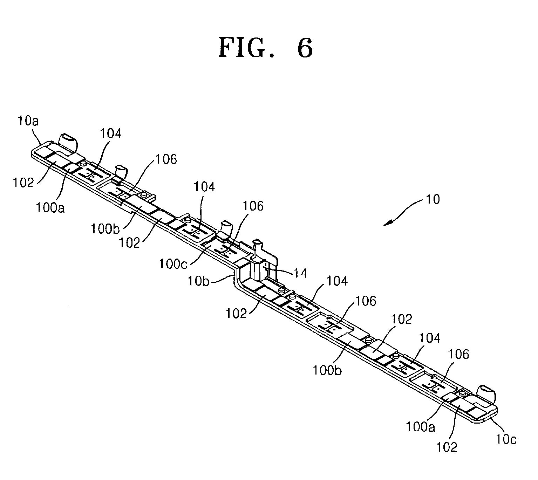

FIGS. 5 and 6 are schematic views illustrating a part of a process of combining the lead plates 100a, 100b, and 100c with the cap cover 10 of FIG. 1.

Referring to FIGS. 5 and 6, the plurality of lead plates 100a, 100b, and 100c include combiners 108 which extend from the first connectors 104 or the second connectors 106 and have at least one or more holes 108h.

The plurality of lead plates 100a, 100b, and 100c are inserted into the boss parts 12 of the cap cover 10 through the holes 108h. Upper surfaces of the boss parts 12 are heated and fused by heat fusers P to fix the lead plates 100a, 100b, and 100c to the cap cover 10.

Therefore, the boss parts 12 are fused with the combiners 108 of the lead plates 100a, 100b, and 100c, and upper ends of the boss parts 12 heated and fused by the heat fusers P are spread. As a result, the lead plates 100a, 100b, and 100c are effectively prevented from separating from the cap cover 10.

It is clear for a person skilled in the art that the disclosed embodiments can also be combined where possible.

## Claims

1. A cap cover covering a battery pack comprising:
a first plate (10a) formed in a first direction;
a second plate (10b) formed in a second direction; and
a third plate (10c) formed in a third direction,
wherein the first and third plates (10a, 10c) have a height difference therebetween due to the second plate (10b) and cover upper surfaces of a plurality of battery cells (20a, 20b, 20c, 20d) arranged with a height difference therebetween, and the second plate (10b) covers an exposed area (20bs) exposed by the height difference between the battery cells (20b, 20c) and includes a temperature sensor inserting part (14) configured to accommodate a temperature sensor (200).

2. The cap cover of claim 1, wherein the first and third plates (10a, 10c) are formed to expose electrode terminals (24a, 24b) of the battery cells (20a, 20b, 20c, 20d).

3. The cap cover of claim 1 or 2, wherein the first and third directions are the same direction.

4. The cap cover of one of claims 1 to 3, wherein the first and second directions are perpendicular to each other.

5. The cap cover of one of claims 1 to 4, further comprising:
a plurality of lead plates (100a, 100b, 100c) which are spaced apart from one another and electrically connect the plurality of battery cells (20a, 20b, 20c, 20d) to one another.

6. The cap cover of claim 5, wherein the first and third plates (10a, 10c) further comprise boss parts (12) which protrude to combine the plurality of lead plates (100a, 100b, 100c) with the first, second, and third plates (10a, 10b, 10c).

7. The cap cover of claim 5 or 6, wherein each of the plurality of lead plates (100a, 100b, 100c) comprises a thermal cut off (TCO) element (102).

8. The cap cover of one of claims 5 to 7, wherein the plurality of lead plates (100a, 100b, 100c) further comprise:
combiners (108) which comprise a plurality of holes (108h) to be combined with one of the plurality of boss parts (102) ; and
at least one connectors (104, 106) which contact the electrode terminals (24a, 24b) of each of the battery cells (20a, 20b, 20c, 20d) to be electrically connected to each of the battery cells (20a, 20b, 20c, 20d).

9. The cap cover of claim 8, wherein each connector (104, 106) comprises a slit having H-shape.

10. The cap cover of claim 8 or 9 , wherein each connector (104, 106) comprise:
a pair of welding terminals (112) spaced apart from each other; and
a pair of bypass parts (114a, 114b) which bypass above and under the welding terminals (112) to electrically connect the welding terminals (112) to one another.

11. The cap cover of claim 10,
wherein each of the bypass parts (114a, 114b) comprise first end (116a) connected to one of the welding terminals (112) and second end (116b) connected to an other one of the welding terminals (112),
wherein the distance between the first end (116a) and the second end (116b) is greater than the distance between the pair of welding terminals (112).

12. The cap cover of claim 1, wherein the temperature sensor inserting part (14) encloses at least one side of the temperature sensor (200).

13. The cap cover of one of claim 1 or 12, wherein the temperature sensor inserting part (14) exposes the exposed area (20bs) and the temperature sensor (200) contacts the exposed area (20bs).

14. A battery pack comprising:
a plurality of battery cells (20a, 20b, 20c, 20d), each comprising first and second electrode terminals (24a, 24b),are arranged with a height difference therebetween; and
a cap cover (10) according to one of claims 1 to 13.

## Patentansprüche

1. Abdeckkappe, die ein Batteriepack abdeckt, umfassend:
eine erste Platte (10a), die in einer ersten Richtung ausgebildet ist;
eine zweite Platte (10b), die in einer zweiten Richtung ausgebildet ist; und
eine dritte Platte (10c), die in einer dritten Richtung ausgebildet ist,
wobei die erste und dritte Platte (10a, 10c) aufgrund der zweiten Platte (10b) einen Höhenunterschied zwischen sich aufweisen und obere Oberflächen einer Mehrzahl von Batteriezellen (20a, 20b, 20c, 20d) abdecken, die mit einem Höhenunterschied zwischen sich angeordnet sind, und die zweite Platte (10b) einen freiliegenden Bereich (20bs) abdeckt, der durch den Höhenunterschied zwischen den Batteriezellen (20b, 20c) freiliegt, und einen Temperatursensoreinsetzteil (14) umfasst, der dazu ausgelegt ist, einen Temperatursensor (200) aufzunehmen.

2. Abdeckkappe nach Anspruch 1, wobei die erste und dritte Platte (10a, 10c) dazu ausgebildet sind, Elektrodenanschlusspunkte (24a, 24b) der Batteriezellen (20a, 20b, 20c, 20d) freizulegen.

3. Abdeckkappe nach Anspruch 1 oder 2, wobei es sich bei der ersten und dritten Richtung um die gleiche Richtung handelt.

4. Abdeckkappe nach einem der Ansprüche 1 bis 3, wobei die erste und zweite Richtung senkrecht zueinander sind.

5. Abdeckkappe nach einem der Ansprüche 1 bis 4, weiterhin umfassend:
eine Mehrzahl von Leitungsplatten (100a, 100b, 100c), die voneinander beabstandet sind und die Mehrzahl von Batteriezellen (20a, 20b, 20c, 20d) elektrisch miteinander verbinden.

6. Abdeckkappe nach Anspruch 5, wobei die erste und dritte Platte (10a, 10c) weiterhin Noppenteile (12) umfassen, die vorstehen, um die Mehrzahl von Leitungsplatten (100a, 100b, 100c) mit der ersten, zweiten und dritten Platte (10a, 10b, 10c) zu kombinieren.

7. Abdeckkappe nach Anspruch 5 oder 6, wobei jede der Mehrzahl von Leitungsplatten (100a, 100b, 100c) einen Thermounterbrecher (thermal cut off, TCO) (102) umfasst.

8. Abdeckkappe nach einem der Ansprüche 5 bis 7, wobei die Mehrzahl von Leitungsplatten (100a, 100b, 100c) weiterhin umfasst:
Kombinationselemente (108), die eine Mehrzahl von Löchern (108h) umfassen, die mit einem der Mehrzahl von Noppenteilen (102) zu kombinieren sind; und
wenigstens ein Verbindungselemente (104, 106), die in Kontakt mit den Elektrodenanschlusspunkten (24a, 24b) jeder der Batteriezellen (20a, 20b, 20c, 20d) sind, um mit jeder der Batteriezellen (20a, 20b, 20c, 20d) elektrisch verbunden zu sein.

9. Abdeckkappe nach Anspruch 8, wobei jedes Verbindungselement (104, 106) einen H-förmigen Schlitz umfasst.

10. Abdeckkappe nach Anspruch 8 oder 9, wobei jedes Verbindungselement (104, 106) umfasst:
ein Paar voneinander beabstandeter Schweißanschlusspunkte (112); und
ein Paar von Umgehungsteilen (114a, 114b), welche die Schweißanschlusspunkte (112) oben und unten umgehen, um die Schweißanschlusspunkte (112) elektrisch miteinander zu verbinden.

11. Abdeckkappe nach Anspruch 10,
wobei jeder der Umgehungsteile (114a, 114b) ein mit einem der Schweißanschlusspunkte (112) verbundenes, erstes Ende (116a) und ein mit einem anderen der Schweißanschlusspunkte (112) verbundenes, zweites Ende (116b) umfasst,
wobei der Abstand zwischen dem ersten Ende (116a) und dem zweiten Ende (116b) größer ist als der Abstand zwischen dem Paar von Schweißanschlusspunkten (112).

12. Abdeckkappe nach Anspruch 1, wobei der Temperatursensoreinsetzteil (14) wenigstens eine Seite des Temperatursensors (200) umschließt.

13. Abdeckkappe nach einem von Anspruch 1 oder 12, wobei der Temperatursensoreinsetzteil (14) den freiliegenden Bereich (20bs) freilegt und der Temperatursensor (200) in Kontakt mit dem freiliegenden Bereich (20bs) ist.

14. Batteriepack, umfassend:
eine Mehrzahl von Batteriezellen (20a, 20b, 20c, 20d), die jeweils einen ersten und zweiten Elektrodenanschlusspunkt (24a, 24b) umfassen und mit einem Höhenunterschied zwischen sich angeordnet sind; und
eine Abdeckkappe (10) nach einem der Ansprüche 1 bis 13.

## Revendications

1. Couvercle couvrant un bloc-batterie comprenant :
une première plaque (10a) formée dans une première direction ;
une deuxième plaque (10b) formée dans une deuxième direction ; et
une troisième plaque (10c) formée dans une troisième direction,
dans lequel les première et troisième plaques (10a, 10c) ont une différence de hauteur entre elles en raison de la deuxième plaque (10b) et couvrent des surfaces supérieures d'une pluralité d'éléments de batterie (20a, 20b, 20c, 20d) agencés avec une différence de hauteur entre eux, et la deuxième plaque (10b) couvre une zone exposée (20bs) qui est exposée par la différence de hauteur entre les éléments de batterie (20b, 20c) et comporte une partie d'insertion de capteur de température (14) configurée pour recevoir un capteur de température (200).

2. Couvercle de la revendication 1, dans lequel les première et troisième plaques (10a, 10c) sont formées pour exposer des bornes d'électrode (24a, 24b) des éléments de batterie (20a, 20b, 20c, 20d).

3. Couvercle de la revendication 1 ou 2, dans lequel les première et troisième directions représentent la même direction.

4. Couvercle de l'une des revendications 1 à 3, dans lequel les première et deuxième directions sont perpendiculaires l'une à l'autre.

5. Couvercle de l'une des revendications 1 à 4, comprenant en outre :
une pluralité de plaques conductrices (100a, 100b, 100c) qui sont espacées les unes des autres et relient électriquement la pluralité d'éléments de batterie (20a, 20b, 20c, 20d) les unes aux autres.

6. Couvercle de la revendication 5, dans lequel les première et troisième plaques (10a, 10c) comprennent en outre des parties de bossage (12) qui font saillie pour combiner la pluralité de plaques conductrices (100a, 100b, 100c) avec les première, deuxième, et troisième plaques (10a, 10b, 10c).

7. Couvercle de la revendication 5 ou 6, dans lequel chacune de la pluralité de plaques conductrices (100a, 100b, 100c) comprend un élément (102) de blocage thermique (TCO).

8. Couvercle de l'une des revendications 5 à 7, dans lequel la pluralité de plaques conductrices (100a, 100b, 100c) comprend en outre :
des combineurs (108) qui comprennent une pluralité de trous (108h) à combiner avec l'une de la pluralité de parties de bossage (102) ; et
au moins des connecteurs (104, 106) qui entrent en contact avec les bornes d'électrode (24a, 24b) de chacun des éléments de batterie (20a, 20b, 20c, 20d) à relier électriquement à chacun des éléments de batterie (20a, 20b, 20c , 20d).

9. Couvercle de la revendication 8, dans lequel chaque connecteur (104, 106) comprend une fente ayant une forme de H.

10. Couvercle de la revendication 8 ou 9, dans lequel chaque connecteur (104, 106) comprend :
une paire de bornes de soudage (112) espacées l'une de l'autre ; et
une paire de parties de dérivation (114a, 114b) qui effectuent un contournement au-dessus et en dessous des bornes de soudage (112) pour relier électriquement les bornes de soudage (112) l'une à l'autre.

11. Couvercle de la revendication 10,
dans lequel chacune des parties de dérivation (114a, 114b) comprend une première extrémité (116a) reliée à l'une des bornes de soudage (112) et une deuxième extrémité (116b) reliée à l'autre des bornes de soudage (112),
dans lequel la distance entre la première extrémité (116a) et la deuxième extrémité (116b) est supérieure à la distance entre la paire de bornes de soudage (112).

12. Couvercle de la revendication 1, dans lequel la partie d'insertion de capteur de température (14) entoure au moins un côté du capteur de température (200).

13. Couvercle de l'une des revendications 1 ou 12, dans lequel la partie d'insertion de capteur de température (14) expose la zone exposée (20bs) et le capteur de température (200) entre en contact avec la zone exposée (20bs).

14. Bloc-batterie comprenant :
une pluralité d'éléments de batterie (20a, 20b, 20c, 20d), comprenant chacun des première et deuxième bornes d'électrode (24a, 24b), agencés avec une différence de hauteur entre eux ; et
un couvercle (10) selon l'une des revendications 1 à 13.
